# FASCICULE DE BREVET EUROPEEN

(11) **EP 3 250 976 B1**
(45) Date de publication et mention de la délivrance du brevet: **07.07.2021**
(21) Numéro de dépôt: 16733152.9
(22) Date de dépôt: 27.05.2016
(51) Int. Cl.: B01F 5/04, B01F 15/04, B01F 15/00, G05D 21/02, B01F 3/04

(54) **DISPOSITIF DE RÉGULATION DE LA CONCENTRATION D'UN GAZ DANS UN LIQUIDE**
VORRICHTUNG ZUM EINSTELLEN DER KONZENTRATION EINES GASES IN EINER FLÜSSIGKEIT
DEVICE FOR ADJUSTING THE CONCENTRATION OF A GAS IN A LIQUID

(30) Priorité: 29.05.2015 FR 1554843
(43) Date de publication de la demande: 06.12.2017
(73) Titulaire: Pourtaud, Nicolas, 34690 Fabregues (FR); Rigail, François, 34160 Beaulieu (FR)
(72) Inventeur: Pourtaud, Nicolas, 34690 Fabregues (FR); Rigail, François, 34160 Beaulieu (FR)
(74) Mandataire: Rhein, Alain
(86) Numéro de dépôt international: PCT/FR2016/051259
(87) Numéro de publication internationale: WO 2016/193586

(56) Documents cités:
- WO-A1-86/06515
- WO-A1-2009/143056
- WO-A1-2013/144598
- FR-A1- 2 656 546
- US-A1- 2002 144 727
- US-A1- 2003 234 030

## Description

L'invention concerne un dispositif de régulation de la concentration d'un gaz dans un liquide, et notamment de la concentration de dioxyde de carbone dans du vin.

L'art antérieur connait un dispositif de régulation de la concentration d'un gaz dans un liquide, qui comprend une cartouche où se déroule le changement de concentration du gaz dans le liquide (typiquement, une cartouche à base de parois poreuses hydrophobes qui ne permettent que le passage des gaz vers le liquide ou hors de celui-ci), une conduite d'amenée de liquide dans la cartouche, une conduite d'amenée du gaz dans la cartouche, et une conduite de sortie du liquide hors de la cartouche. Dans l'art antérieur, la conduite d'amenée du gaz comprend une vanne de régulation du gaz dont le débit est commandé par une consigne de débit du gaz. Ce dispositif est notamment utilisé pour réguler la concentration de dioxyde de carbone dans du vin.

On connait également, du document US 2003/234030 un tel dispositif de régulation de la concentration d'un gaz inerte dans un liquide. Dans ce document, le gaz consiste en de l'azote, tandis que le liquide est de l'eau pure, destiné à être utilisé dans le nettoyage mis en œuvre lors de la fabrication de plaquettes de semiconducteurs.

Dans le même domaine de nettoyage des semiconducteurs que le précédent document, on connait la demande WO 2009/143056 qui décrit un dispositif similaire, comprenant une cartouche où se déroule le changement de concentration de gaz dans un liquide.

La présente invention vise à réaliser un dispositif régulation de la concentration de gaz dans un liquide dont le rendement de gazage du liquide est nettement amélioré, la dissolution du gaz est optimisée et la précision de la concentration est nettement améliorée

En particulier la présente invention concerne un dispositif de régulation de la concentration d'un gaz dans un liquide selon la revendication 1.

L'invention concerne un dispositif de régulation de la concentration de gaz dans un liquide, le dispositif comprenant une cartouche où se déroule le changement de concentration de gaz dans le liquide, la cartouche étant formée de parois poreuses hydrophobes qui ne permettent que le passage des gaz vers le liquide ou hors de celui-ci, une conduite d'amenée de liquide dans la cartouche, une conduite d'amenée de gaz dans la cartouche, et une conduite de sortie du liquide hors de la cartouche, la conduite d'amenée de gaz comprenant un détendeur configuré pour réguler la quantité de gaz dans le liquide par une régulation de la pression du gaz entre le détendeur et la cartouche, et dont la consigne de pression est commandée par une consigne de quantité de gaz dans le liquide et par une quantité de gaz dans le liquide mesurée par un capteur de concentration de gaz situé dans la conduite de sortie du liquide.

Ledit dispositif de régulation comprend également une conduite de vide extrayant de la cartouche au moins un gaz extrait du liquide, le dispositif étant caractérisé en ce que ladite conduite de vide comprend, entre la cartouche et une pompe à vide, un système de gestion de vide adapté à diriger, en fonction du fait que du gaz est ajouté dans le liquide ou non par la conduite d'amenée de gaz, le chemin pris par le vide qui, en l'absence d'ajout de gaz dans le liquide, est une portion de la conduite de vide qui ne comprend aucun organe de régulation du vide, et, lorsque du gaz est ajouté dans le liquide, une conduite annexe de vide qui est parallèle à la portion de la conduite de vide et qui comprend une vanne de régulation du vide.

La quantité de gaz s'échangeant avec le liquide dans la cartouche (et donc le débit de gaz s'échangeant avec le liquide) varie en fonction de la valeur de la pression du gaz entre le détendeur et la cartouche et de l'aptitude de la cartouche à permettre l'échange des molécules de gaz.

Le fait d'avoir remplacé, premièrement, la vanne de régulation de gaz par un détendeur, et, deuxièmement, la régulation du débit de la vanne de régulation du gaz par une régulation de la pression du gaz entre le détendeur et la cartouche en fonction, d'une part, de la consigne de quantité de gaz dans le liquide et, d'autre part, de la quantité de gaz dans le liquide mesurée dans la conduite de sortie du liquide, a permis d'obtenir une amélioration de la précision de la régulation de la concentration du gaz dans le liquide. Ainsi, si le capteur de concentration de gaz indique un manque de gaz, vu que la consigne de quantité de gaz dans le liquide est constante, la consigne de pression augmente, ce qui entraîne une augmentation de l'ajout de gaz au niveau de la cartouche, donc une augmentation de la concentration de gaz dans le liquide, et, de ce fait, une baisse du manque de gaz. Au contraire, si le capteur de concentration de gaz indique un excès de gaz, vu que la consigne de quantité de gaz dans le liquide est constante, la consigne de pression diminue, ce qui entraîne une diminution de l'ajout de gaz au niveau de la cartouche, donc une diminution de la concentration de gaz dans le liquide, et, de ce fait, une baisse de l'excès de gaz. Ainsi, la concentration de gaz dans le liquide tend rapidement vers la consigne de quantité de gaz.

Selon un premier mode de réalisation, la régulation de la pression de gaz entre le détendeur et la cartouche est une régulation PID.

Selon un second mode de réalisation, la consigne de quantité de gaz dans le liquide est choisie par un utilisateur du dispositif. De préférence, dans le cas où le liquide est du vin et le gaz du dioxyde de carbone, cette consigne est comprise entre 500 mg/l et 10 g/l.

Selon un troisième mode de réalisation, la conduite d'amenée de gaz comprend, entre la cartouche et le détendeur, un système de gestion de gaz adapté à commander, en fonction de la consigne de pression et d'une consigne de chemin, le chemin de gaz pris par le gaz pour aller dans la cartouche, le chemin de gaz étant, lorsque la consigne de pression est supérieure à la consigne de chemin, une portion de la conduite d'amenée de gaz qui a une première perte de charge, et, lorsque la consigne de pression est inférieure à la consigne de chemin, une conduite annexe d'amenée de gaz qui est parallèle à la portion de la conduite d'amenée de gaz et qui a une seconde perte de charge supérieure à la première perte de charge, la consigne de chemin dépendant de l'écart entre les première et seconde pertes de charge.

Selon une première variante du troisième mode de réalisation, au moins l'une des deux pertes de charge de la portion de la conduite d'amenée de gaz et de la conduite annexe d'amenée de gaz est fixe.

Selon une seconde variante du troisième mode de réalisation, les première et seconde pertes de charge sont fixes. Avantageusement, la consigne de chemin est égale à l'écart entre les première et seconde pertes de charge.

Comme indiqué le dispositif de régulation comprend une conduite de vide extrayant de la cartouche au moins un gaz extrait du liquide. Le gaz introduit par la conduite d'amenée de gaz peut faire partie des gaz extraits de la cartouche par la conduite de vide.

De préférence, l'extraction des gaz par le vide est commandée par une consigne de vide qui, quand le vide passe par la portion de la conduite de vide, commande la pompe à vide, et quand le vide passe par la conduite annexe de vide, commande la vanne de régulation.

Avantageusement, quand le vide passe par la portion de la conduite de vide (et donc qu'il n'y a pas d'ajout de gaz dans le liquide), la consigne de vide est déterminée en fonction de la consigne de quantité d'un gaz dans le liquide et de la quantité de ce gaz dans le liquide mesurée par un capteur de concentration de ce gaz qui est situé dans la conduite de sortie du liquide. De préférence, notamment dans le cas où le liquide est du vin, le gaz utilisé pour déterminer la consigne de vide quand ce dernier passe par la portion de conduite de vide est le dioxyde de carbone.

Avantageusement, quand le vide passe par la conduite annexe de vide (et donc qu'il y a un ajout de gaz - du dioxyde de carbone - dans le liquide - dans du vin), la consigne de vide est déterminée en fonction de la consigne de quantité d'un gaz dans le liquide et de la quantité de ce gaz dans le liquide mesurée par un capteur de concentration de ce gaz qui est situé dans la conduite de sortie du liquide. De préférence, notamment dans le cas où le liquide est du vin, le gaz utilisé pour déterminer la consigne de vide quand ce dernier passe par la conduite annexe de vide est du dioxygène.

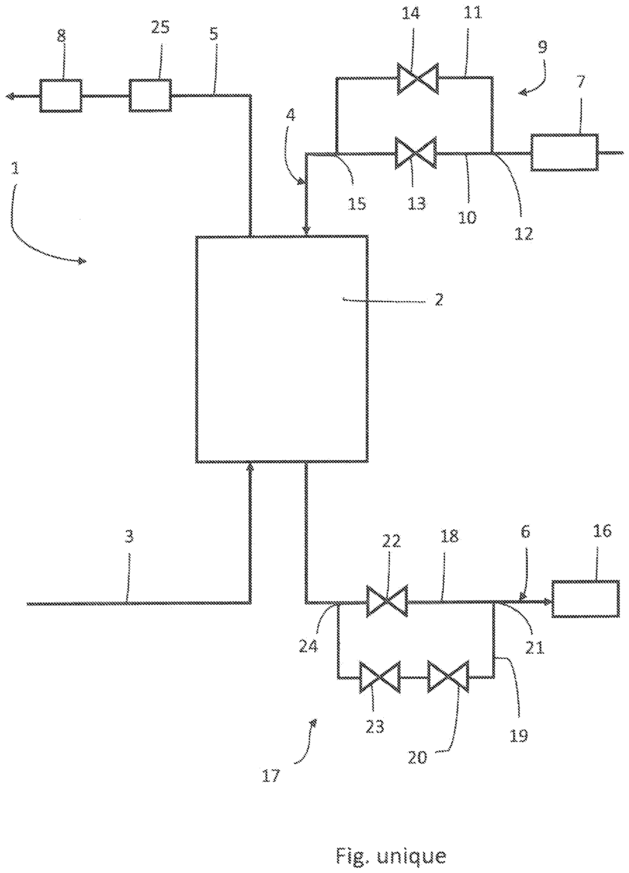

D'autres particularités et avantages de la présente invention apparaîtront dans la description d'un mode de réalisation donné à titre d'exemple non limitatif et illustré dans le dessin unique mis en annexe.

L'invention concerne un dispositif de régulation 1 adapté à réguler la concentration d'un gaz dans un liquide, Ce dispositif de régulation 1 est particulièrement adapté pour la régulation de la concentration de dioxyde de carbone dans du vin,

Le dispositif de régulation 1 comprend une cartouche 2 où se déroule le changement de concentration du gaz (ici, du dioxyde de carbone) dans le liquide (ici, du vin), une conduite d'amenée de liquide 3 adaptée à amener le liquide (ici, le vin) dans la cartouche 2, une conduite d'amenée de gaz 4 adaptée à assener le gaz (ici, le dioxyde de carbone) dans la cartouche 2, une conduite de sortie du liquide 5 adaptée à sortir le liquide (ici, le vin) hors de la cartouche 2, et une conduite de vide 6 adaptée à extraire de la cartouche 2 les gaz extraits du liquide (ici, des gaz extraits du vin).

La cartouche 2 est formée de parois poreuses hydrophobes qui ne permettent que le passage des gaz vers le liquide ou hors de celui-ci, Elle est dimensionnée pour des débits de liquide (dont le vin) particulièrement importants. Ici, la circulation des gaz et du liquide est réalisée à contre-courant (elle pourrait être à co-courant).

Selon l'invention, la conduite d'assenée de gaz 4 comprend un détendeur 7 dont la consigne de pression est commandée par une consigne de quantité de gaz (ici, du dioxyde de carbone) dans le liquide (ici, le vin) et par une quantité de gaz (ici, du dioxyde de carbone) dans le liquide (ici, le vin) mesurée par un capteur de concentration de gaz 8 (un capteur de concentration de dioxyde de carbone 8) situé dans la conduite de sortie du liquide 5.

La consigne de pression permet de réguler la pression du gaz (ici, du dioxyde de carbone) entre le détendeur 7 et la cartouche 2. Ici, cette régulation est une régulation PID.

La consigne de quantité de gaz (ici, de dioxyde de carbone) dans le liquide (ici, le vin) est fixe et choisie par un utilisateur du dispositif de régulation 1.

De préférence, la consigne de quantité de dioxyde de carbone dans le vin est comprise entre 500 mg/l et 10 g/l. Une consigne d'environ 500 mg/l correspond à du vin rouge, et une consigne d'environ 10 g/l correspond à du vin mousseux tel que du champagne. La consigne de quantité de gaz dans le liquide, même dans le cas où le gaz est du dioxyde de carbone et le liquide du vin, peut être inférieure à 500 mg/l.

La conduite d'amenée de gaz 4 comprend, entre la cartouche 2 et le détendeur 7, un système de gestion de gaz 9. Le système de gestion de gaz 9 permet de commander, en fonction de la consigne de pression et d'une consigne de chemin, le chemin pris par le gaz (ici, le dioxyde de carbone) pour aller dans la cartouche 2. Lorsque la consigne de pression est supérieure à la consigne de chemin, le chemin pris par le gaz (ici, le dioxyde de carbone) est une portion 10 de la conduite d'amenée de gaz 4, cette portion 10 ayant une première perte de charge (de préférence, la portion 10 de la conduite d'amenée de gaz 4 est le seul chemin pris par le gaz (ici, le dioxyde de carbone) quand la consigne de pression est supérieure à la consigne de chemin). Au contraire, lorsque la consigne de pression est inférieure à la consigne de chemin, le chemin pris par le gaz (ici, le dioxyde de carbone) est une conduite annexe d'amenée de gaz 11 qui est parallèle à la portion 10 de la conduite d'amenée de gaz 4 et qui a une seconde perte de charge supérieure à la première perte de charge (de préférence, la conduite annexe d'amenée de gaz 11 est le seul chemin pris par le gaz (ici, le dioxyde de carbone) quand la consigne de pression est inférieure à la consigne de chemin). La consigne de chemin dépend de l'écart entre les première et seconde pertes de charge. Ainsi, pour une même consigne de pression imposée au détendeur 7, il est possible d'introduire deux quantités de gaz (ici, de dioxyde de carbone) différentes dans le liquide (ici, le vin) selon le chemin pris par ce gaz (ici, par le dioxyde de carbone).

Dans le présent mode de réalisation, le système de gestion de gaz 9 comprend, d'une première part, une jonction amont 12 en forme de T qui relie le détendeur 7, la portion 10 de la conduite d'amenée de gaz 4 et la conduite annexe d'amenée de gaz 11, d'une seconde part, une première vanne amont 13 disposée dans la portion 10 de la conduite d'amenée de gaz 4, et, d'une troisième part, une seconde vanne amont 14 disposée dans la conduite annexe d'amenée de gaz 11.

La conduite d'amenée de gaz 4 comprend également, en aval du système de gestion de gaz 9, une jonction amont complémentaire 15 en forme de T permettant à la conduite annexe d'amenée de gaz 11 de rejoindre la portion 10 de la conduite d'amenée de gaz 4.

Dans le présent mode de réalisation, la première perte de charge est fixe. Toujours dans le présent mode de réalisation, la seconde perte de charge est fixe. Du fait que les première et seconde pertes de charge sont fixes, l'écart entre ces deux pertes de charge est fixe et donc la consigne de chemin qui est sensiblement égal à cet écart, est également fixe. Ici, la valeur de la consigne de chemin est d'environ de 2 g/l. Ainsi, plus la valeur de la seconde perte de charge est élevée, plus le dispositif de régulation 1 permet d'introduire précisément des faibles quantités de gaz (ici, de dioxyde de carbone) dans le liquide (ici, le vin) .

Il serait possible d'avoir un plus grand nombre de chemins pour transporter le gaz (ici, le dioxyde de carbone) du détendeur 7 à la cartouche 2.

L'extraction des gaz hors du liquide (ici, du vin) est réalisée par une pompe à vide 16 disposée dans la conduite de vide 6. Cette extraction est commandée par une consigne de vide. Dans le présent mode de réalisation, du fait que le dispositif de régulation 1 ne comprend aucun organe permettant de trier les types de gaz extraits du liquide (ici, du vin), le vide extrait simultanément du liquide (ici, du vin) différents gaz. Dans le cas du vin, l'extraction concerne essentiellement le dioxyde de carbone et le dioxygène.

Dans le présent exemple, la régulation de l'extraction des gaz hors du liquide (ici, hors du vin) est une régulation PID.

La conduite de vide 6 comprend, entre la cartouche 2 et la pompe à vide 16, un système de gestion de vide 17 qui est adapté à diriger le chemin pris par le vide (et donc les gaz extraits du liquide pour aller de la cartouche 2 à la pompe à vide 16) en fonction du fait que du gaz (ici, du dioxyde de carbone) est ajouté dans le liquide (ici, le vin) ou non par la conduite d'amenée de gaz 4. En l'absence d'ajout de gaz (ici, de dioxyde de carbone) dans le liquide (ici, le vin), le chemin pris par le vide (et donc les gaz extraits du liquide - ici, le vis) est une portion 18 de la conduite de vide 6, la portion 18 ne comprenant aucun organe de régulation du vide (de préférence, la portion 18 de la conduite de vide 6 est le seul chemin pris par le vide en l'absence d'ajout de gaz - ici, de dioxyde de carbone - dans le liquide - ici, le vin). Au contraire, lorsque du gaz (ici, du dioxyde de carbone) a été ajouté dans le liquide (ici, le vin), le chemin pris par le vide (et donc les gaz extraits du liquide - ici, le vin) est une conduite annexe de vide 19 qui est parallèle à la portion 18 de la conduite de vide 6 et qui comprend une vanne de régulation 20 permettant de réguler le vide (de préférence, la conduite annexe de vide 19 est le seul chemin pris par le vide quand du gaz - ici, du dioxyde de carbone - est ajouté dans le liquide - ici, le vin).

Dans le présent mode de réalisation, le système de gestion de vide 17 comprend, d'une première part, une jonction aval 21 en forme de T qui relie la pompe à vide 16, la portion 18 de la conduite de vide 6 et la conduite annexe de vide 19, d'une seconde part, une première vanne aval 22 disposée dans la portion 18 de la conduite de vide 6, et, d'une troisième part, une seconde vanne aval 23 disposée dans la conduite annexe de vide 19.

La conduite de vide comprend également, entre la cartouche 2 et le système de gestion de vide 17, une jonction aval complémentaire 24 en forme de T permettant à la conduite annexe de vide 19 de rejoindre la portion 18 de la conduite de vide 6.

De préférence, quand le vide passe par la portion 18 de la conduite de vide 6 (quand aucun gaz n'a été ajouté dans le liquide), la consigne de vide commande la pompe à vide 16 (ici, la vitesse de la pompe à vide 16). Egalement de préférence, quand le vide passe par la conduite annexe de vide 19 (quand du gaz a été ajouté dans le liquide), la consigne de vide commande la vanne de régulation du vide 20 (ici, l'ouverture de la vanne de régulation 20) et, avantageusement, la pompe à vide 16 est commandée pour fonctionner à un régime fixe prédéterminé qui est indépendant de la consigne de vide.

Avantageusement, quand le vide passe par la portion 18 de la conduite de vide 6 (quand aucun gaz n'a été ajouté dans le liquide), la consigne de vide est déterminée en fonction de la consigne de quantité d'un gaz dans le liquide (ici, le vin) et de la quantité de ce gaz dans le liquide (ici, le vin) mesurée par un capteur de concentration de ce gaz 8, 25 qui est situé dans la conduite de sortie du liquide 5. Dans le présent mode de réalisation dans lequel le liquide est du vin, l'utilisateur du dispositif de régulation choisira a priori de contrôler le dioxyde de carbone. Aussi, la consigne de vide est déterminée par la consigne de quantité de dioxyde de carbone dans le vin (préalablement déterminée par l'utilisateur) et par la quantité de dioxyde de carbone dans le vin mesurée par le capteur de concentration de dioxyde de carbone 8. Dans le cas où le gaz à contrôler serait le dioxygène, la consigne de vide serait déterminée par une consigne de quantité de dioxygène dans le vin (déterminée par l'utilisateur) et par la quantité de dioxygène dans le liquide mesurée par un capteur de concentration de dioxygène 25 disposé dans la conduite de sortie du liquide 5.

Avantageusement, quand le vide passe par la conduite annexe de vide 19 (quand du gaz a été ajouté dans le liquide), la consigne de vide est déterminée en fonction de la consigne de quantité d'un gaz dans le liquide (ici, le vin) et de la quantité de ce gaz dans le liquide (ici, le vin) mesurée par un capteur de concentration de ce gaz 25 qui est situé dans la conduite de sortie du liquide 5. Dans le présent mode de réalisation dans lequel le liquide est du vin, vu que la concentration de dioxyde de carbone est contrôlée via la conduite d'amenée de gaz 4, l'utilisateur du dispositif de régulation choisira a priori de contrôler le dioxygène. Aussi, la consigne de vide est déterminée par la consigne de quantité de dioxygène dans le vin (déterminée par l'utilisateur) et par la quantité de dioxygène dans le vin mesurée par le capteur de concentration de dioxygène 25. De préférence, la consigne de quantité de dioxygène dans le vin est inférieure à 1 mg/l, et de préférence inférieure à 0,5 mg/l. Dans le cas où le dispositif de régulation 1 ne peut respecter à la fois les consignes de quantité de dioxyde de carbone et de dioxygène dans le vin, il est configuré pour respecter en priorité la consigne de quantité de dioxyde de carbone, la vanne de régulation 20 étant commandée en conséquence.

Le présent dispositif de régulation 1 permet de réguler les concentrations de deux gaz (ici, le dioxyde de carbone et le dioxygène) dans un liquide (ici, le vin) en ne réalisant qu'un seul passage au travers de la cartouche 2. Il permet également de réguler ces concentrations sans consommer de diazote.

L'utilisation du dispositif de régulation 1 peut se résumer ainsi.

Dans un premier temps, un utilisateur fait circuler le liquide (ici, le vin) dans le dispositif de régulation 1 après avoir indiqué à un automate du dispositif de régulation 1 une consigne de quantité d'un premier gaz dans le liquide (ici, une consigne de quantité de dioxyde de carbone dans le vin) et, éventuellement une consigne de quantité d'un second gaz dans le liquide (ici, une consigne de quantité de dioxygène dans le vin).

La régulation de la concentration du premier gaz se fait par la comparaison de la quantité du premier gaz (ici, le dioxyde de carbone) dans le liquide (ici, le vin) mesurée par le capteur de concentration du premier gaz 8 (ici, le capteur de concentration de dioxyde de carbone 8) avec la consigne de quantité du premier gaz (ici, le dioxyde de carbone) dans le liquide (ici, le vin). Cette comparaison, faite par l'automate, permet de déterminer la consigne de pression du détendeur 7 et la consigne de vide.

Si la quantité du premier gaz (ici, le dioxyde de carbone) dans le liquide (ici, le vin) est inférieure à la consigne de quantité du premier gaz (ici, le dioxyde de carbone) dans le liquide (ici, le vin), la consigne de pression du détendeur 7 est égale à zéro, ce qui fait qu'aucun premier gaz n'est introduit dans le liquide (il n'y a pas d'ajout de dioxyde de carbone dans le vin). De ce fait la régulation de la concentration du premier gaz (ici, du dioxyde de carbone) dans le liquide (ici, le vin) est réalisée par la consigne de vide qui commande la pompe à vide 16 de façon à extraire les gaz, dont le dioxyde de carbone, du liquide (ici, du vin). La régulation de la pompe à vide 16 entraîne une diminution de la quantité du premier gaz (ici, le dioxyde de carbone) dans le liquide (ici, le vin) jusqu'à ce qu'elle atteigne la valeur de la consigne de quantité du premier gaz (ici, le dioxyde de carbone) dans le liquide (ici, le vin).

Si la quantité du premier gaz (ici, le dioxyde de carbone) dans le liquide (ici, le vin) est supérieure à la consigne de quantité du premier gaz (ici, le dioxyde de carbone) dans le liquide (ici, le vin), la consigne de pression du détendeur 7 est supérieure à zéro, ce qui fait qu'une quantité du premier gaz (ici, du dioxyde de carbone) est introduite dans le liquide (ici, le vin). La régulation du détendeur 7 entraîne une augmentation de la quantité du premier gaz (ici, le dioxyde de carbone) dans le liquide (ici, le vin) jusqu'à ce qu'elle atteigne la valeur de la consigne de quantité du premier gaz (ici, le dioxyde de carbone) dans le liquide (ici, le vis).

Dans le cas où le premier gaz (ici, le dioxyde de carbone) est introduit dans le liquide (ici, le vin), si l'utilisateur a indiqué à l'automate une consigne de quantité d'un second gaz dans le liquide (ici, une consigne de quantité de dioxygène dans le vin) et que la quantité de ce second gaz dans le liquide est inférieure à cette consigne, la régulation de la concentration du second gaz (ici, du dioxygène) dans le liquide (ici, le vin) est réalisée par la consigne de vide qui commande la vanne de régulation 20 de façon à ne pas extraire de gaz (dont le dioxyde de carboné et le dioxygène) du liquide (ici, du vin).

Toujours dans le cas où le premier gaz (ici, le dioxyde de carbone) est introduit dans le liquide (ici, le vin), si l'utilisateur a indiqué à l'automate une consigne de quantité d'un second gaz dans le liquide (ici, une consigne de quantité de dioxygène dans le vin) et que la quantité de ce second gaz dans le liquide est supérieure à cette consigne, la régulation de la concentration du second gaz (ici, du dioxygène) dans le liquide (ici, le vin) est réalisée par la consigne de vide qui commande la vanne de régulation 20 de façon à extraire les gaz dont le dioxyde de carbone et le dioxygène, du liquide (ici, du vin). La régulation de la vanne de régulation 20 entraîne une baisse des quantités des premier et second gaz (ici, du dioxyde de carbone et du dioxygène) dans le liquide (ici, le vin). Du fait de la baisse de la quantité du second gaz (ici, le dioxygène) dans le liquide (ici, le vin), la valeur de la consigne de vide diminue jusqu'à ce que la quantité du second gaz (ici, le dioxygène) dans le liquide (ici, le vin) atteigne la valeur de la consigne de quantité du second gaz dans le liquide (ici, la consigne de quantité de dioxygène dans la vin). Du fait, d'une part, que la consigne de la quantité du premier gaz dans le liquide (ici, la quantité de dioxyde de carbone dans le vin) est fixe, et, d'autre part, que la quantité du premier gaz (ici, le dioxyde de carbone) dans le liquide (ici, le vin) baisse, la consigne de pression du détendeur 7 augmente, et de ce fait, l'ajout du premier gaz (ici, le dioxyde de carbone) dans le liquide (ici, le vin) augmente. La régulation du détendeur 7 entraîne une augmentation de la quantité du premier gaz (ici, le dioxyde de carbone) dans le liquide (ici, le vin) jusqu'à ce qu'elle atteigne la valeur de la consigne de quantité du premier gaz (ici, la dioxyde de carbone) dans le liquide (ici, le vin). La concentration du premier gaz (ici, le dioxyde de carbone) est le résultat de la régulation du détendeur 7 et de la vanne de régulation 20. La concentration du second gaz (ici, le dioxygène) est le résultat de la régulation de la vanne de régulation 20. Dans le cas où le dispositif de régulation 1 ne peut pas respecter la consigne de quantité du premier gaz dans le liquide (ici, la consigne de quantité de dioxyde de carbone dans le vin) et la consigne de quantité du second gaz dans le liquide (ici, la consigne de quantité de dioxygène dans le vin), l'automate commande le détendeur 7 et la vanne de régulation 20 dans le but de respecter en priorité la consigne de quantité du premier gas dans le liquide (ici, la consigne de quantité de dioxyde de carbone dans le vin)

## Revendications

1. Dispositif de régulation (1) de la concentration d'un gaz dans un liquide, le dispositif comprenant une cartouche (2) où se déroule le changement de concentration du gaz dans le liquide, la cartouche étant formée de parois poreuses hydrophobes qui ne permettent que le passage des gaz vers le liquide ou hors de celui-ci, une pompe à vide (16), une conduite d'amenée de liquide (3) dans la cartouche (2), une conduite d'amenée de gaz (4) dans la cartouche (2), et une conduite de sortie du liquide (5) hors de la cartouche (2), la conduite d'amenée de gaz (4) comprenant un détendeur (7) configuré pour réguler la quantité de gaz dans le liquide par une régulation de la pression du gaz entre le détendeur et la cartouche, et dont la consigne de pression est commandée par une consigne de quantité de gaz dans le liquide et par une quantité de gaz dans le liquide mesurée par un capteur de concentration de gaz (8) situé dans la conduite de sortie du liquide (5), ledit dispositif de régulation (1) comprenant également une conduite de vide (6) extrayant de la cartouche (2) au moins un gaz extrait du liquide, le dispositif (1) étant **caractérisé en ce qu'**il comprend une conduite annexe de vide (19), et que ladite conduite de vide (6) comprend, entre la cartouche (2) et la pompe à vide (16), un système de gestion de vide (17) adapté à diriger, en fonction du fait que du gaz est ajouté dans le liquide ou non par la conduite d'amenée de gaz (4), le chemin pris par le vide qui, en l'absence d'ajout de gaz dans le liquide, est une portion (18) de la conduite de vide (6) qui ne comprend aucun organe de régulation du vide, et, lorsque du gaz est ajouté dans le liquide, le chemin est la conduite annexe de vide (19) qui est parallèle à la portion (18) de la conduite de vide (6) et qui comprend une vanne de régulation (20) du vide.

2. Dispositif de régulation (1) selon la revendication 1, **caractérisé en ce que** la conduite d'amenée de gaz (4) comprend, entre la cartouche (2) et le détendeur (7), un système de gestion de gaz (9) adapté à commander, en fonction de la consigne de pression et d'une consigne de chemin, le chemin de gaz pris par le gaz pour aller dans la cartouche (2), le chemin de gaz étant, lorsque la consigne de pression est supérieure à la consigne de chemin, une portion (10) de la conduite d'amenée de gaz (4) qui a une première perte de charge, et, lorsque la consigne de pression est inférieure à la consigne de chemin, une conduite annexe d'amenée de gaz (11) qui est parallèle à la portion (10) de la conduite d'amenée de gaz (4) et qui a une seconde perte de charge supérieure à la première perte de charge, la consigne de chemin dépendant de l'écart entre les première et seconde pertes de charge.

3. Dispositif de régulation (1) selon la revendication 2, **caractérisé en ce que** les première et seconde pertes de charge sont fixes.

4. Dispositif de régulation (1) selon la revendication 3, **caractérisé en ce que** la consigne de chemin est égale à l'écart entre les première et seconde pertes de charge.

5. Dispositif de régulation (1) selon l'une des revendications 1 à 4, **caractérisé en ce que** l'extraction des gaz par le vide est commandée par une consigne de vide qui, quand le vide passe par la portion (18) de la conduite de vide (6), commande la pompe à vide (16), et quand le vide passe par la conduite annexe de vide (19), commande la vanne de régulation (20).

6. Dispositif de régulation (1) selon la revendication 5, **caractérisé en ce que**, quand le vide passe par la portion (18) de la conduite de vide (6), la consigne de vide est déterminée en fonction de la consigne de quantité d'un gaz dans le liquide et de la quantité de ce gaz dans le liquide mesurée par un capteur de concentration de ce gaz (8, 25) qui est situé dans la conduite de sortie du liquide (5).

7. Dispositif de régulation (1) selon l'une des revendications 5 et 6, **caractérisé en ce que**, quand le vide passe par la conduite annexe de vide (19), la consigne de vide est déterminée en fonction de la consigne de quantité d'un gaz dans le liquide et de la quantité de ce gaz dans le liquide mesurée par un capteur de concentration de ce gaz (8, 25) qui est situé dans la conduite de sortie du liquide (5).

8. Dispositif de régulation (1) selon la revendication 7, **caractérisé en ce que**, quand il ne peut respecter à la fois la consigne de quantité d'un premier gaz dans le liquide qui est introduit dans la cartouche (2) par la conduite d'amenée de gaz (4) et qui est extrait de la cartouche (2) par la conduite de vide (6), et la consigne de quantité d'un second gaz dans le liquide qui est extrait de la cartouche (2) par la conduite de vide (6), le dispositif de régulation (1) est configuré pour respecter en priorité la consigne de quantité du premier gaz dans le liquide.

## Patentansprüche

1. Vorrichtung zum Einstellen (1) der Konzentration eines Gases in einer Flüssigkeit, bei der die Vorrichtung eine Patrone (2), in der die Änderung der Konzentration des Gases in der Flüssigkeit stattfindet, wobei die Patrone aus hydrophoben porösen Wänden gebildet ist, die nur den Durchgang der Gase in die Flüssigkeit oder aus der letzteren erlauben, eine Vakuumpumpe (16), eine Leitung zum Zuführen von Flüssigkeit (3) in die Kartusche (2), eine Leitung zum Zuführen von Gas (4) in die Kartusche (2) und eine Leitung zum Abführen von Flüssigkeit (5) aus der Patrone (2) umfasst, wobei die Gaszuführleitung (4) ein Gasdruckreduzierventil (7) umfasst, das konfiguriert ist, um die Gasmenge in der Flüssigkeit durch Einstellen des Gasdrucks zwischen dem Reduzierventil und der Patrone, und dessen Drucksollwert durch einen Sollwert für die Gasmenge in der Flüssigkeit und durch eine durch einen in der Flüssigkeitsabfuhrleitung (5) befindlichen Gaskonzentrationssensor (8) gemessene Gasmenge in der Flüssigkeit gesteuert wird, wobei die besagte Regelvorrichtung (1) ebenfalls eine Vakuumleitung (6) umfasst, die aus der Patrone (2) mindestens ein aus der Flüssigkeit extrahiertes Gas extrahiert, wobei die Vorrichtung (1) **dadurch gekennzeichnet ist, dass** sie eine Hilfsvakuumleitung (19) umfasst, und dass die Vakuumleitung (6) zwischen der Patrone (2) und der Vakuumpumpe (16) ein Vakuummanagementsystem (17) umfasst, das angepasst ist, um abhängig davon, ob in die Flüssigkeit Gas durch die Gaszufuhrleitung (4) zugefügt wird oder nicht, der von dem Vakuum gefolgte Weg zu leiten, wobei der von dem Vakuum gefolgte Weg in Abwesenheit von Zufügung von Gas in die Flüssigkeit ein Teil (18) der Vakuumleitung (6), der kein Vakuumeinstellorgan umfasst, ist und, wenn Gas in die Flüssigkeit zugefügt wird, eine Hilfsvakuumleitung (19) ist, die parallel zu dem Teil (18) der Vakuumleitung (6) verläuft und ein Vakuumeinstellventil (20) umfasst.

2. Einstellvorrichtung (1) nach Anspruch 1, **dadurch gekennzeichnet, dass** die Gaszufuhrleitung (4) zwischen der Patrone (2) und dem Druckreduzierventil (7) ein Gasmanagementsystem (9) umfasst, das angepasst ist, um abhängig von dem Drucksollwert und einem Wegsollwert den von dem Gas gefolgten Weg, um in die Patrone (2) zu gelangen, zu steuern, wobei der Gasweg, wenn der Drucksollwert größer als der Wegsollwert ist, ein Teil (10) der Gaszufuhrleitung (4) ist, der einen ersten Druckverlust aufweist, und, wenn der Drucksollwert kleiner als der Wegsollwert ist, eine Hilfsgaszufuhrleitung (11) ist, die parallel zu dem Teil (10) der Gaszufuhrleitung (4) verläuft und die einen zweiten Druckverlust aufweist, der größer als der erste Druckverlust ist, wobei der Wegsollwert von der Differenz zwischen dem ersten und dem zweiten Druckverlust abhängig ist.

3. Einstellvorrichtung (1) nach Anspruch 2, **dadurch gekennzeichnet, dass** der erste und der zweite Druckverlust fest eingestellt sind.

4. Einstellvorrichtung (1) nach Anspruch 3, **dadurch gekennzeichnet, dass** der Wegsollwert gleich der Differenz zwischen dem ersten und dem zweiten Druckverlust ist.

5. Einstellvorrichtung (1) nach einem der Ansprüche 1 bis 4, **dadurch gekennzeichnet, dass** die Extraktion der Gase durch Vakuum durch einen Vakuumsollwert gesteuert wird, der, wenn das Vakuum durch den Teil (18) der Vakuumleitung (6) fließt, die Vakuumpumpe (16) steuert, und, wenn das Vakuum durch die Hilfsvakuumleitung (19) fließt, das Regelventil (20) steuert.

6. Einstellvorrichtung (1) nach Anspruch 5, **dadurch gekennzeichnet, dass** der Vakuumsollwert beim Durchgang des Vakuums durch den Teil (18) der Vakuumleitung (6) abhängig vom Mengensollwert eines Gases in der Flüssigkeit und der von einem in Flüssigkeitabfuhrleitung (5) befindlichen Konzentrationssensor dieses Gases (8, 25) in der Flüssigkeit gemessenen Menge dieses Gases bestimmt wird.

7. Einstellvorrichtung (1) nach einem der Ansprüche 5 und 6, **dadurch gekennzeichnet, dass** der Vakuumsollwert beim Durchgang des Vakuums durch die Hilfsvakuumleitung (19) abhängig vom Mengensollwert eines Gases in der Flüssigkeit und von der von einem in Flüssigkeitabfuhrleitung (5) befindlichen Konzentrationssensor dieses Gases (8, 25) in der Flüssigkeit gemessenen Menge dieses Gases bestimmt wird.

8. Einstellvorrichtung (1) nach Anspruch 7, **dadurch gekennzeichnet, dass** die Einstellvorrichtung (1), wenn sie nicht sowohl den Mengensollwert eines ersten Gases in der Flüssigkeit, die aus der Gaszufuhrleitung (4) in die Patrone (2) eingeführt wird und durch die Vakuumleitung (6) aus der Patrone (2) extrahiert wird, als auch den Mengensollwert eines zweiten Gases in der Flüssigkeit, das durch die Vakuumleitung (6) aus der Patrone (2) extrahiert wird, einhalten kann, konfiguriert ist, um mit Vorrang den Mengensollwert des ersten Gases in der Flüssigkeit einzuhalten.

## Claims

1. Device for adjusting (1) the concentration of a gas in a liquid, the device comprising a cartridge (2) in which occurs the change in concentration of the gas in the liquid, the cartridge being formed of hydrophobic porous walls, which only permit the passing through of gases into the liquid or out of the latter, a vacuum pump (16), a pipe for supplying liquid (3) into the cartridge (2), a pipe for supplying gas (4) into the cartridge (2), and a pipe for discharging liquid (5) from the cartridge (2), the gas supply pipe (4) comprising a pressure regulator (7) configured to regulate the quantity of gas in the liquid by regulating the pressure of the gas between the pressure regulator and the cartridge, and the setpoint for the pressure of which is controlled by a setpoint for the amount of gas in the liquid and by an amount of gas in the liquid measured by a gas concentration sensor (8) located in the liquid discharge pipe (5), said device for adjusting (1) comprising also a vacuum pipe (6) extracting from the cartridge (2) at least one gas extracted from the liquid, the device (1) being **characterized in that** it comprises an auxiliary vacuum pipe (19) and **in that** said vacuum pipe (6) comprises, between the cartridge (2) and a vacuum pump (16), a vacuum management system (17) adapted to guide, depending on whether gas is added to the liquid or not by the gas supply pipe (4), the path taken by the vacuum, which, in the absence of gas being added to the liquid, is a portion (18) of the vacuum pipe (6), which does not comprise any vacuum regulating organ, and, when gas is added to the liquid, the path is the auxiliary vacuum pipe (19), which is parallel to the portion (18) of the vacuum pipe (6) and which comprises a vacuum regulating valve (20).

2. Device for adjusting (1) according to claim 1, wherein the gas supply pipe (4) comprises, between the cartridge (2) and the pressure regulator (7), a gas management system (9) adapted to control, depending on the setpoint for the pressure and a setpoint for the path, the gas path followed by the gas to enter into the cartridge (2), the gas path being, when the setpoint for the pressure is higher than the setpoint for the path, a portion (10) of the gas supply pipe (4), which has a first pressure loss, and, when the setpoint for the pressure is lower than the setpoint for the path, an auxiliary gas supply pipe (11), which is parallel to the portion (10) of the gas supply pipe (4) and which has a second pressure loss higher than the first pressure loss, the setpoint for the path depending on the difference between the first and second pressure losses.

3. Device for adjusting (1) according to claim 2, wherein the first and second pressure losses are fixed.

4. Device for adjusting (1) according to claim 3, wherein the setpoint for the path is equal to the difference between the first and second pressure losses.

5. Device for adjusting (1) according to one of claims 1 to 4, wherein the gas extraction by the vacuum is controlled by a setpoint for the vacuum, which, when the vacuum passes through the portion (18) of the vacuum pipe (6), controls the vacuum pump (16) and, when the vacuum passes through the auxiliary vacuum pipe (19), controls the regulating valve (20).

6. Device for adjusting (1) according to claim 5, wherein, when the vacuum passes through the portion (18) of the vacuum pipe (6), the setpoint for the vacuum is determined depending on the setpoint for the amount of a gas in the liquid and the amount of this gas in the liquid measured by a concentration sensor for this gas (8, 25), which is located in the liquid discharge pipe (5).

7. Device for adjusting (1) according to one of claims 5 and 6, wherein, when the vacuum passes through the auxiliary vacuum pipe (19), the setpoint for the vacuum is determined depending on the setpoint for the amount of a gas in the liquid and the amount of this gas in the liquid measured by a concentration sensor for this gas (8, 25), which is located in the liquid discharge pipe (5) .

8. Device for adjusting (1) according to claim 9, wherein, when it cannot meet both the setpoint for the amount of a first gas in the liquid, which is introduced into the cartridge (2) by the gas supply pipe (4) and which is extracted from the cartridge (2) by the vacuum pipe (6), and the setpoint for the amount of a second gas in the liquid, which is extracted from the cartridge (2) by the vacuum pipe (6), the device for adjusting (1) is configured to meet, by priority, the setpoint for the amount of the first gas in the liquid.
